# EUROPEAN PATENT SPECIFICATION

(11) **EP 4 707 014 B1**
(45) Date of publication and mention of the grant of the patent: **12.08.2026**
(21) Application number: 25194732.1
(22) Date of filing: 08.08.2025
(51) Int. Cl.: B60K 6/365, B60K 6/387, B60K 6/40, B60K 6/445, B60K 6/405, F16H 63/30

(54) **HYBRID DRIVE DEVICE**
HYBRIDANTRIEBSVORRICHTUNG
DISPOSITIF D'ENTRAÎNEMENT HYBRIDE

(30) Priority: 27.08.2024 JP 2024145371
(43) Date of publication of application: 11.03.2026
(73) Proprietor: AISIN CORPORATION, Aichi 448-8650 (JP)
(72) Inventor: Hanaki, Yasunori, Aichi, 448-8650 (JP); Kawamura, Akihiro, Aichi, 448-8650 (JP); Nagase, Rio, Aichi, 448-8650 (JP); Kubo, Rikiya, Aichi, 448-8650 (JP)
(74) Representative: Kramer Barske Schmidtchen Patentanwälte PartG mbB

(56) References cited:
- CN-A- 103 442 917
- CN-A- 111 006 012
- KR-A- 20230 099 044
- US-A1- 2008 078 591
- US-A1- 2024 060 564

## Description

### TECHNICAL FIELD

This disclosure generally relates to a hybrid drive device that includes an input member to be drive-connected to an internal combustion engine, a first rotating electric machine arranged on a first axis, a second rotating electric machine arranged on a second axis parallel to and different from the first axis, an output member to be drive-connected to wheels, and a power transmission mechanism transmitting drive force among the first rotating electric machine, the input member, the second rotating electric machine, and the output member.

### BACKGROUND DISCUSSION

For example, WO2019-194078A (Reference 1) discloses a motor unit to be mounted on a hybrid vehicle or the like. The reference signs in parentheses used in the following description of the BACKGROUND DISCUSSION are those in Reference 1. KR 10-2023-0099044 A discloses a further hybrid drive device. US 2024/0060564 A1 discloses a gearbox actuator unit.

A motor unit (10) disclosed in Reference 1 includes a power transmission mechanism (5) transmitting drive force generated by a drive source, and includes a clutch (6). The clutch (6) can connect or disconnect target members to or from each other. Thereby, a transmission path of the drive force can be optionally switched, and thus, a plurality of kinds of running modes can be achieved.

An actuator (69) is used for operation of the clutch (6). The actuator (69) requires an engagement drive source for engagement and disengagement of the clutch (6). However, an arrangement position for this engagement drive source tends to be restricted in relation to an arrangement position for a connection structure between the motor unit (10) and an engine (2) or an arrangement position for the power transmission mechanism (5).

A need thus exists for a technique that can enhance a degree of freedom for arrangement of an engagement drive source driving an engagement member.

### SUMMARY

A hybrid drive device according to an aspect of this disclosure includes the features as specified in claim 1.

According to this configuration, the engagement drive source can be arranged at a position distanced from the engagement member in the axial direction. Thereby, a space on a radial outer side of the target rotating electric machine can be used for arranging the engagement drive source. Thus, according to this configuration, a degree of freedom for arranging the engagement drive source can be easily enhanced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a skeleton diagram illustrating a schematic configuration of a hybrid drive device;
Fig. 2 is a schematic diagram of the hybrid drive device when viewed in an axial direction;
Fig. 3 is an enlarged sectional view illustrating a part of the hybrid drive device; and
Fig. 4 is a perspective view of an engagement device.

### DETAILED DESCRIPTION

### [Definition]

The description of this embodiment uses the following definitions.

The term "rotating electric machine" is used as a concept encompassing any of a motor (electric motor), a generator (electric generator), and a motor-generator that functions as each of the motor and the generator, depending on necessity.

The term "drive-connected" refers to a state where two rotating elements are connected to each other in such a way as to allow drive force to be transmitted between the two rotating elements, and is used as a concept encompassing a state where the two rotating elements are connected to each other in such a way as to rotate integrally with each other and a state where the two rotating elements are connected to each other via one or more transmission members in such a way as to allow drive force to be transmitted between the two rotating elements. Examples of the transmission member include various members each transmitting rotation at the same rotational speed or while changing a rotational speed, and specifically include a shaft, a gear mechanism, a belt, and a chain. Examples of the transmission member may also include an engagement device selectively transmitting rotation and drive force, and specifically include a friction engagement device and a meshing type engagement device. However, when used for each of rotating elements constituting a planetary gear mechanism, the term "drive-connected" refers to a state where the rotating element is drive-connected to a rotating element via none of the other rotating elements constituting the planetary gear mechanism.

Concerning arrangement of two members, the term "overlapping with each other when viewed in a specific direction" refers to existence of an area where an imaginary straight line parallel to the specific direction intersects with both of the two members, when the imaginary straight line is moved in each direction perpendicular to the imaginary straight line.

One of a first rotating electric machine and a second rotating electric machine is defined as a target rotating electric machine. A direction parallel to a target axis that is an axis on which the target rotating electric machine is arranged is defined as "axial direction X". One side in the axial direction X is defined as "first axial side X1". An opposite side in the axial direction X is defined as "second axial side X2". A direction perpendicular to the target axis is defined as "radial direction Y". An inner side in the radial direction Y is defined as "radial inner side Y1". An outer side in the radial direction Y is defined as "radial outer side Y2". A direction circling around the target axis is defined as "circumferential direction Z".

The following describes an embodiment of a hybrid drive device, with reference to the drawings.

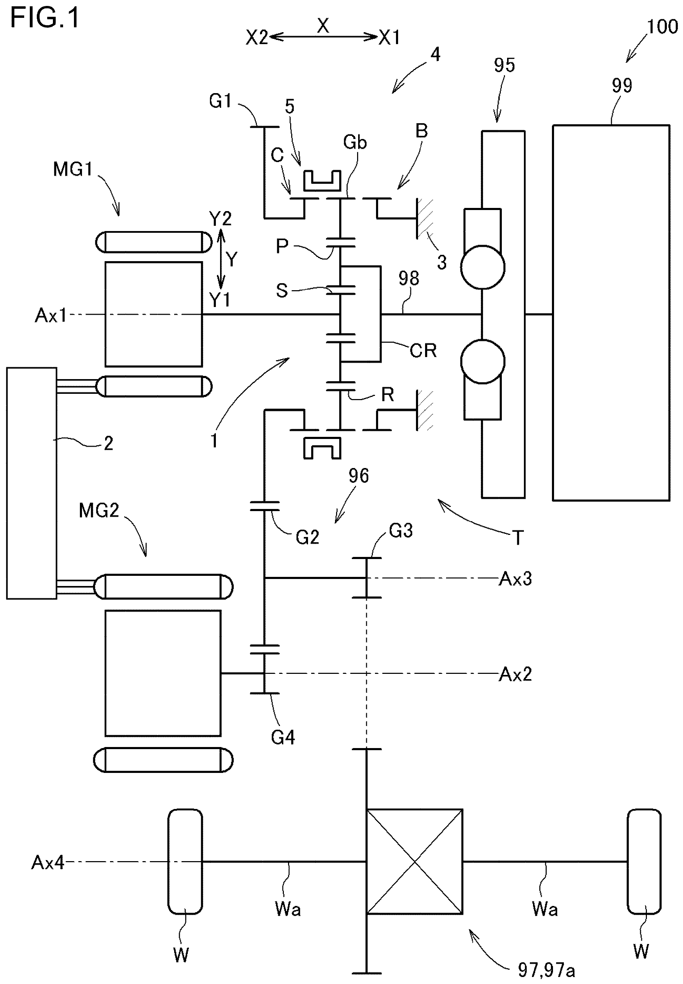

As illustrated in Fig. 1, a hybrid drive device 100 includes an input member 98 drive-connected to an internal combustion engine 99, a first rotating electric machine MG1 arranged on a first axis Ax1, a second rotating electric machine MG2 arranged on a second axis Ax2 parallel to and different from the first axis Ax1, an output member 97a drive-connected to wheels W, and a power transmission mechanism T transmits drive force among the first rotating electric machine MG1, the input member 98, the second rotating electric machine MG2, and the output member 97a. In this embodiment, a counter shaft 96 is arranged on a third axis Ax3. The output member 97a is arranged on a fourth axis Ax4. The first axis Ax1, the second axis Ax2, the third axis Ax3, and the fourth axis Ax4 are arranged in parallel to each other and at different positions. In this embodiment, the target rotating electric machine is the first rotating electric machine MG1, and the target axis is the first axis Ax1. The axial direction X, the radial direction Y, and the circumferential direction Z are determined based on the first axis Ax1.

The hybrid drive device 100 can be used in a vehicle in which an output shaft of the internal combustion engine 99 is oriented in a direction lateral to a running direction of the vehicle. Examples of such a vehicle include a front-engine, front-drive (FF) type vehicle. For example, the hybrid drive system 100 is used in a hybrid vehicle that can be switched between what is called a split manner and what is called a series manner.

The input member 98 is arranged on the first axis Ax1. In this embodiment, the input member 98 is drive-connected to the internal combustion engine 99 via a damper 95.

The power transmission mechanism T includes a power distribution planetary gear mechanism 1 arranged on the first axis Ax1. The power transmission mechanism T also includes a differential gear mechanism 97. In this embodiment, the above-described output member 97a is a constituent of the differential gear mechanism 97, and is drive-connected to a drive shaft Wa. The power transmission mechanism T does not include respective rotor shafts of the first rotating electric machine MG1 and the second rotating electric machine MG2.

The power distribution planetary gear mechanism 1 includes a first rotating element S drive-connected to the first rotating electric machine MG1, a second rotating element CR drive-connected to the input member 98, and a third rotating element R drive-connected to the output member 97a and the second rotating electric machine MG2.

**In** this embodiment, a rotational speed is set in the order of the first rotating element S, the second rotating element CR, and the third rotating element R. The power distribution planetary gear mechanism 1 is a single-pinion type planetary gear mechanism that includes a sun gear as the first rotating element S, a carrier as the second rotating element CR, and a ring gear as the third rotating element R. However, there is no limitation to this. The power distribution planetary gear mechanism 1 may be configured as a double-pinion type planetary gear mechanism in which a rotational speed is set in the order of the first rotating element S (sun gear), the third rotating element R (ring gear), and the second rotating element CR (carrier). Hereinafter, the first rotating element S is simply referred to as the sun gear S. The second rotating element CR is simply referred to as the carrier CR. The third rotating element R is simply referred to as the ring gear R.

The first rotating electric machine MG1 is drive-connected to the sun gear S. The internal combustion engine 99 is drive-connected to the carrier CR. The second rotating electric machine MG2 is drive-connected to the ring gear R via a disconnection clutch C. The second rotating electric machine MG2 is drive-connected to the wheels W. The ring gear R is configured in such a way that rotation of the ring gear R can be stopped by a brake B.

**In** this embodiment, the hybrid drive device 100 includes an inverter unit 2. The inverter unit 2 is configured to supply alternating current to each of the first rotating electric machine MG1 and the second rotating electric machine MG2. The alternating current has three phases corresponding to a U-phase, a V-phase, and a W-phase.

The thus-configured hybrid drive device 100 is switchable between a split-manner hybrid drive mode (hereinafter, referred to as "split mode") and a series-manner hybrid drive mode (hereinafter, referred to as "series mode").

When an unillustrated control unit (ECU) determines execution of the split mode, the control unit controls the disconnection clutch C to be engaged, and controls the brake B to be released. Thereby, the ring gear R of the power distribution planetary gear mechanism 1, the second rotating electric machine MG2, and the wheels W are connected to each other in such a way as to rotate in conjunction with each other. In this example, these are connected to each other via a counter shaft 96.

**In** this split mode, at the time of hybrid running in which the internal combustion engine 99 is operating, drive force of the internal combustion engine 99 is input from the input member 98 to the carrier CR of the power distribution planetary gear mechanism 1. A part of the drive force input to the carrier CR is transmitted to the first rotating electric machine MG1 via the sun gear S, and is regenerated by the first rotating electric machine MG1 to charge a battery (or the electric power is supplied directly to the second rotating electric machine MG2). Meanwhile, the regenerated torque is supplied to the sun gear S by the regeneration of the first rotating electric machine MG1. Thereby, the remaining of the torque input to the carrier CR is transmitted from the ring gear R to the wheels W via the counter shaft 96. In other words, the power distribution planetary gear mechanism 1 distributes the drive force of the internal combustion engine 99 to the first rotating electric machine MG1 and the counter shaft 96 (wheels W). In this state, the second rotating electric machine MG2 outputs assist torque, based on required drive force such as an accelerator opening degree, depending on necessity so that the drive force is transmitted to the counter shaft and output to the wheels W.

When drive running of EV running in the split mode is determined, the drive rotation of the second rotating electric machine MG2 is output to the wheels W via the counter shaft 96. At this time, when the disconnection clutch C is engaged, the ring gear R is rotated by the drive rotation of the second rotating electric machine MG2. However, the internal combustion engine 99 is stopped, and thus, the carrier CR is stopped. For this reason, the sun gear S and the first rotating electric machine MG1 are idly rotated. Meanwhile, when non-drive running of the EV running in the split mode is determined, drive force is transmitted from the wheels W, reversely from the case of the drive running, and this drive force is regenerated by the second rotating electric machine MG2.

Incidentally, for example, in a case of the EV running by the split mode in a short time period, the sun gear S and the first rotating electric machine MG1 are idly rotated to enable the EV running by the second rotating electric machine MG2. However, the continued operation in this state is not favorable in terms of fuel consumption (or electricity consumption). In view of it, the unillustrated control unit determines to switch to the series mode, depending on a state, a running condition, or the like of the vehicle, for example. Thereby, the control unit controls the disconnection clutch C to be released, and controls the brake B to be engaged. Examples that can be considered as the state of the vehicle include a condition of a remaining charged amount of the battery or a water temperature. Examples that can be considered as the running condition include a condition of a case where required drive force is large and a total output of the drive force of the internal combustion engine 99 and the drive force of the second rotating electric machine MG2 is required.

**In** the case of this series mode, in the drive running as the EV running, the drive rotation of the second rotating electric machine MG2 is output to the wheels W, and in the non-drive running, the second rotating electric machine MG2 regenerates drive force by rotation of the wheels W. When a remaining charged amount of the battery becomes low for example, the internal combustion engine 99 is caused to starts operating. As a result, the carrier CR of the power distribution planetary gear mechanism 1 is rotated by the internal combustion engine 99, and the rotation of the ring gear R is stopped by the brake B. Thereby, the sun gear S and the first rotating electric machine MG1 are rotated, and the first rotating electric machine MG1 generates electric power and supplies the generated electric power to the battery. Then, when the electric power generation by the first rotating electric machine MG1 becomes unnecessary, the operation of the internal combustion engine 99 is stopped again.

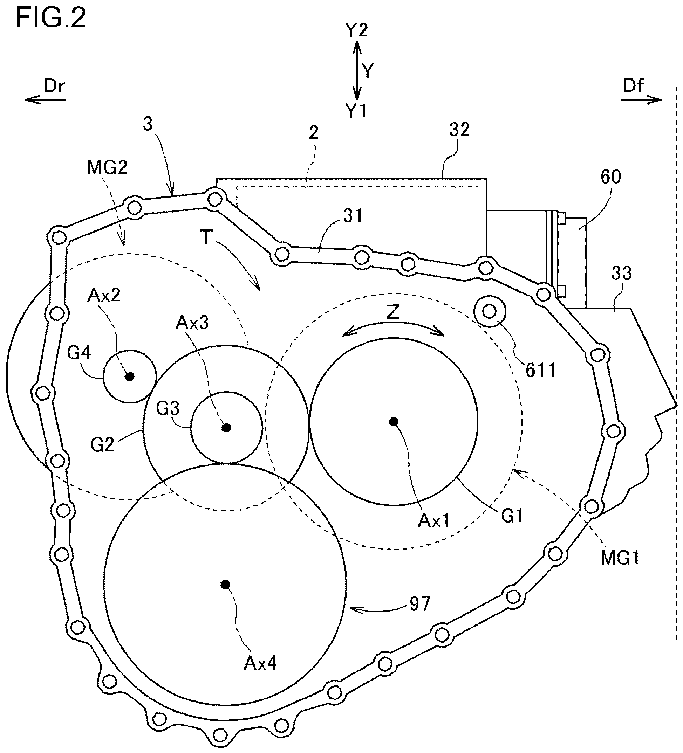

Herein, as illustrated in Fig. 2, the hybrid drive device 100 includes a case 3 that accommodates the input member 98, the first rotating electric machine MG1, the second rotating electric machine MG2, and the power transmission mechanism T.

The case 3 includes a peripheral wall portion 31 that surrounds the first rotating electric machine MG1 (target rotating electric machine) from a radial outer side Y2. In this embodiment, the peripheral wall portion 31 is formed in such a way as to surround at least a part of the second rotating electric machine MG2 in addition to the first rotating electric machine MG1.

The case 3 includes an inverter accommodation portion 32 arranged on a radial outer side Y2 of the peripheral wall portion 31. The inverter unit 2 is accommodated inside the inverter accommodation portion 32. The inverter accommodation portion 32 is configured in such a way as to accommodate at least a part of the inverter unit 2.

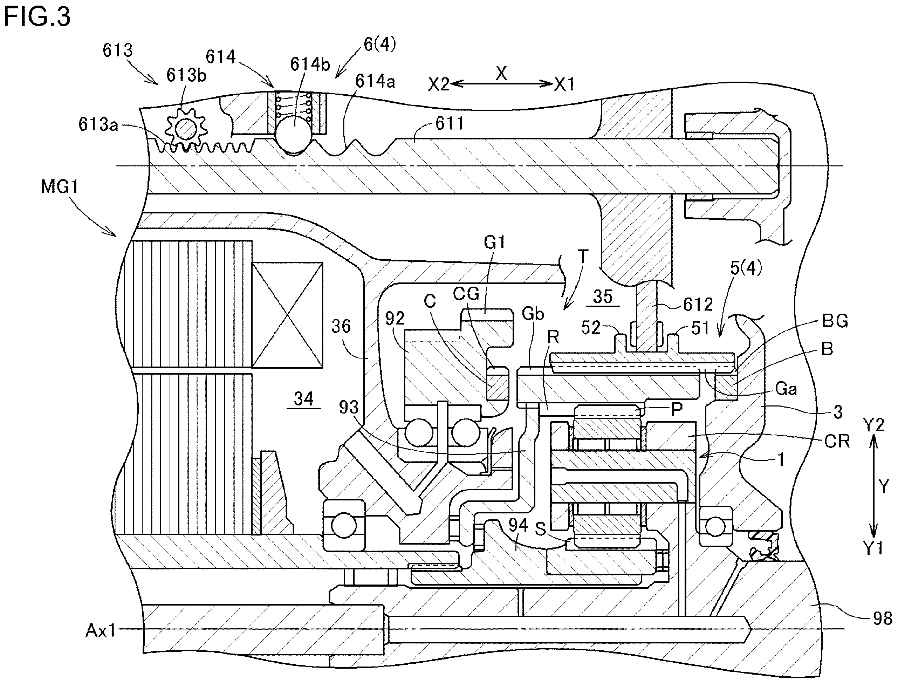

Fig. 3 is a sectional view illustrating an engagement device 4 and a structure around the engagement device 4. The engagement device 4 constitutes the power transmission mechanism T.

As illustrated in Fig. 3, the case 3 includes a rotating electric machine accommodation chamber 34 that accommodates at least one of the first rotating electric machine MG1 and the second rotating electric machine MG2, and a transmission mechanism accommodation chamber 35 that accommodates at least a part of the power transmission mechanism T. The rotating electric machine accommodation chamber 34 and the transmission mechanism accommodation chamber 35 are partitioned from each other by a partition wall 36. In the illustrated example, the transmission mechanism accommodation chamber 35 is arranged on a first axial side X1 of the partition wall 36. The rotating electric machine accommodation chamber 34 is arranged on a second axial side X2 of the partition wall 36.

A part of the shaft-shaped input member 98, a connection shaft 94, a ring gear support member 93, a counter member 92, the power distribution planetary gear mechanism 1, and a part of the engagement device 4 are arranged in the transmission mechanism accommodation chamber 35.

The connection shaft 94 is drive-connected to the first rotating electric machine MG1 in such a way as to be on the same axis (first axis Ax1) as that of the first rotating electric machine MG1. The sun gear S is formed on the connection shaft 94.

Pinion gears P of the power distribution planetary gear mechanism 1 and the carrier CR rotatably supporting the pinion gears P are arranged on an outer circumference of the sun gear S. The carrier CR includes both side plates. One of these side plates is located on a side (first axial side X1) of the internal combustion engine 99 in the axial direction X, and is fixed to the input member 98. In other words, the input member 98 and the carrier CR are drive-connected to each other. The ring gear R is arranged on an outer circumference of the pinion gears P. The engagement device 4 is arranged on a radial outer side Y2 of the ring gear R. In this example, the engagement device 4 is constituted by a dog clutch mechanism that is a dog clutch or a dog brake.

The ring gear support member 93 is supported by the connection shaft 94, on a radial outer side Y2 of the connection shaft 94 in such a way as to be freely rotatable relative to the connection shaft 94. The ring gear support member 93 is formed in a substantially hollow disk shape, and includes an end portion that is on a radial outer side Y2 in the ring gear support member 93 and at which the ring gear R is fixed.

The counter member 92 is attached to the partition wall 36 via a bearing in such a way as to be freely rotatable relative to the partition wall 36. A clutch gear CG of the disconnection clutch C is fixed to the counter member 92.

The engagement device 4 is configured to include an engagement member 5 arranged on the first axis Ax1 in such a way as to be movable in the axial direction X. The engagement device 4 is configured to further include a brake gear BG and a clutch gear CG. In other words, the brake B and the disconnection clutch C are each configured as what is called a meshing type dog clutch. The engagement member 5 is configured in such a way as to switch its own state of engagement with a rotating member constituting the power transmission mechanism T.

The brake gear BG of the brake B is fixed to the case 3. The clutch gear CG of the disconnection clutch C is fixed to the counter member 92. In other words, the brake gear BG is arranged on an opposite side (first axial side X1) of the clutch gear CG in the axial direction X, with respect to the power distribution planetary gear mechanism 1.

The engagement member 5 is a sleeve. Internal teeth Ga are formed on an inner circumferential surface on a radial inner side Y1 in the engagement member 5. External teeth Gb are formed on an outer circumferential surface on a radial outer side Y2 in the ring gear R. The engagement member 5 is configured in such a way as to be movable in the axial direction X in a state where the internal teeth Ga mesh with the external teeth Gb. In other words, the engagement member 5 is arranged on the outer circumference of the ring gear R in such a way as to overlap with the ring gear R of the power distribution planetary gear mechanism 1 when viewed in the radial direction Y.

Movement of the engagement member 5 to a side of the brake gear BG (to a first axial side X1) in the axial direction X causes the engagement member 5 to be positioned at a brake engagement position. Thereby, the internal teeth Ga of the engagement member 5 range over and mesh with the external teeth Gb and the brake gear BG. As a result, the brake B engages with the engagement member 5, and thus prevents the ring gear R from being rotated. In this state, in the above-described series mode for example, the ring gear R does not idly rotate, and thereby, the rotation of the internal combustion engine 99 is transmitted from the carrier CR to the first rotating electric machine MG1 via the sun gear S. Thus, the charge using the first rotating electric machine MG1 is enabled. In such a state where the brake B engages with the engagement member 5, the internal teeth Ga of the engagement member 5 are separated from the clutch gear CG, and the disconnection clutch C is in a released state.

Meanwhile, movement of the engagement member 5 to a side of the clutch gear CG (to a second axial side X2) in the axial direction X causes the engagement member 5 to be positioned at a clutch engagement position. Thereby, the internal teeth Ga of the engagement member 5 range over and mesh with the external teeth Gb and the clutch gear CG. As a result, the ring gear R and the counter member 92 are drive-connected to each other, and the counter shaft 96 (refer to Fig. 1) is drive-connected to the ring gear R via the first gear G1 and the second gear G2. In this state, in the above-described split mode for example, the drive force of the internal combustion engine 99 can be transmitted from the ring gear R to the wheels W via the counter shaft 96. In this state, the internal teeth Ga of the engagement member 5 are separated from the brake gear BG, and the brake B is in a released state.

The engagement device 4 includes an engagement drive mechanism 6 that drives the engagement member 5. The above-described movement of the engagement member 5 in the axial direction X is implemented by the engagement drive mechanism 6.

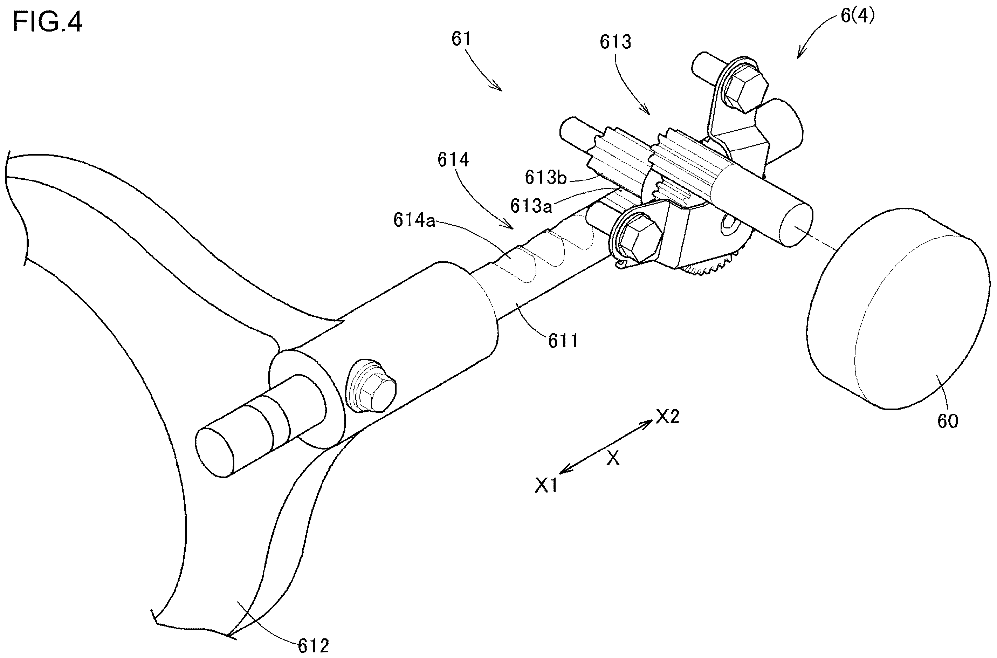

As illustrated in Fig. 3 and Fig. 4, the engagement drive mechanism 6 includes an engagement drive source 60 and an engagement power transmission mechanism 61 that transmits drive force of the engagement drive source 60 to the engagement member 5. The engagement power transmission mechanism 61 includes a transmission member 611 extending along the axial direction X, and is configured to drive-connect the engagement drive source 60 and the engagement member 5 to each other via the transmission member 611. The engagement drive source 60 is configured to include a motor, for example.

The engagement power transmission mechanism 61 includes a connection member 612 and a speed reduction mechanism 613. The connection member 612 is engaged with the engagement member 5 in a state where the connection member 612 is rotatable relative to the engagement member 5 while being restricted from moving relative to the engagement member 5 in the axial direction X. The speed reduction mechanism 613 decelerates the drive rotation generated by the engagement drive source 60, and transmits the decelerated drive rotation to the transmission member 611.

**In** this embodiment, the speed reduction mechanism 613 includes a rack gear 613a and a pinion 613b. The rack gear 613a is formed integrally with the transmission member 611 and extends along the axial direction X. The pinion 613b meshes with the rack gear 613a. In this example, the rack gear 613a is provided at a part of the transmission member 611. However, the rack gear 613a may be provided at another member that operates integrally with the transmission member 611. The engagement drive source 60 is configured in such a way as to drive and rotate the pinion 613b. In this example, the engagement drive source 60 is configured in such a way as to drive and rotate the pinion 613b via the speed reduction mechanism 613. However, the engagement drive source 60 may be configured in such a way as to directly drive and rotate the pinion 613b without interposition of the speed reduction mechanism 613.

The transmission member 611 is coupled to the connection member 612. The drive force generated by the engagement drive source 60 is applied to the transmission member 611 via the speed reduction mechanism 613. Thereby, the transmission member 611 and the connection member 612 move integrally with each other along the axial direction X.

Herein, flange portions 51 and 52 each having a flange shape are formed at an outer circumferential side in the engagement member 5 at two positions spaced in the axial direction X (refer to Fig. 3). The connection member 612 is arranged between the two flange portions 51 and 52 in the axial direction X.

When the connection member 612 is moved to the first axial side X1, the connection member 612 thus presses, to the first axial side X1, the flange portion 51 that is one of the two flange portions 51 and 52 and that is arranged on a first axial side X1. Thereby, the engagement member 5 is moved to the first axial side X1, and the brake B is brought into an engaged state (the disconnection clutch C is brought into a released state).

Meanwhile, when the connection member 612 is moved to a second axial side X2, the connection member 612 thus presses, to a second axial side X2, the flange portion 52 that is the other of the two flange portions 51 and 52 and that is arranged on a second axial side X2. Thereby, the engagement member 5 is moved to a second axial side X2, and the disconnection clutch C is brought into an engaged state (the brake B is brought into a released state).

For example, the engagement drive source 60 is controlled by the unillustrated control unit (ECU) so that the above-described switching of a position of the engagement member 5 is controlled.

**In** this embodiment, the engagement power transmission mechanism 61 includes a detent mechanism 614 that locks the power transmission member 611 at a plurality of locking positions in the axial direction X. When the power transmission member 611 is locked, the connection member 612 coupled to the power transmission member 611 is also locked.

The detent mechanism 614 includes a plurality of recesses 614a aligned along the axial direction X. In this embodiment, a plurality of the recesses 614a are formed on the transmission member 611. A plurality of the recesses 614a are arranged in the transmission member 611, in an area sandwiched in the axial direction X between an area where the rack gear 613a is arranged and an area where the connection member 612 is coupled to the transmission member 611. An arrangement interval of a plurality of the respective recesses 614a corresponds to an interval of a plurality of the above-described locking positions for locking the transmission member 611.

The detent mechanism 614 includes a locking portion 614b configured to be engageable with any of a plurality of the recesses 614a. The locking portion 614b is biased by a biasing member such as a spring. The biasing force of the biasing member causes the locking portion 614b to be fitted into an arbitrary one of the recesses 614a that has come to a position of the locking portion 614b by the movement of the transmission member 611 in the axial direction X.

**In** the above-described manner, the drive force generated by the engagement drive source 60 is transmitted to the connection member 612, and the connection member 612 is thereby operated to move the engagement member 5 in the axial direction X. As a result, an engagement state of the engagement member 5 is switched.

The engagement drive source 60 is arranged at a position that is on a radial outer side Y2 of the first rotating electric machine MG1 and that overlaps with the first rotating electric machine MG1 when viewed in the radial direction Y. The hybrid drive device 100 according to this embodiment is configured to supply, to the speed reduction mechanism 613, oil in the rotating electric machine accommodation chamber 34 (e.g., oil scooped up by the rotation of the first rotating electric machine MG1 or the second rotating electric machine MG2, oil scattered from the center shaft, or oil flowing through a lubricating oil passage) so that the speed reduction mechanism 613 (the pinion 613b and the like) is lubricated. In this regard, in the hybrid drive device 100, the engagement drive source 60 is arranged at a position overlapping with the first rotating electric machine MG1 (i.e., the rotating electric machine accommodation chamber 34) when viewed in the radial direction Y as described above. For this reason, an oil passage for supplying, to the speed reduction mechanism 613, the oil in the rotating electric machine accommodation chamber 34 can be suppressed to be short. Thus, a structure that satisfies a lubrication requirement of the speed reduction mechanism 613 can be simply implemented.

As illustrated in Fig. 2, at least a part of the engagement drive mechanism 6 is attached to an outer surface of the peripheral wall portion 31, at a position adjacent to the inverter accommodation portion 32 in the circumferential direction Z. As described above, the inverter unit 2 is accommodated inside the inverter accommodation portion 32. For convenience of wiring to the first rotating electric machine MG1 and the second rotating electric machine MG2, the inverter unit 2 is preferably arranged at a position directly above the first rotating electric machine MG1 and the second rotating electric machine MG2 (or at a position deviated within an allowable range from the position directly above the first and second rotating electric machines MG1 and MG2). In other words, on the outer surface of the peripheral wall portion 31 of the case 3, an arrangement position of the inverter unit 2 (inverter accommodation portion 32) has priority over an arrangement position of the engagement drive mechanism 6. In this embodiment, the inverter unit 2 (inverter accommodation portion 32) is arranged at a position overlapping the first rotating electric machine MG1 and the second rotating electric machine MG2 when viewed in the up-down direction, and at least a part of the engagement drive mechanism 6 is arranged at a position adjacent to the inverter unit 2 (inverter accommodation portion 32) in the circumferential direction Z.

In Fig. 2, a right side indicates a vehicle front side Df, and a left side indicates a vehicle rear side Dr. In this embodiment, the engagement drive source 60 that is a part of the engagement drive mechanism 6 is arranged on a vehicle front side Df of the inverter unit 2 (inverter accommodation portion 32). If the engagement drive source 60 is arranged on a vehicle rear side Dr of the inverter unit 2 (inverter accommodation portion 32), a long transmission path for the drive force from the engagement drive source 60 to the connection member 612 (refer to Fig. 4) needs to be secured. In this case, the power loss is large, and the efficient operation is difficult. In addition, since devices (e.g., an air conditioner, a safety device, and the like) required on a cabin side are arranged on a vehicle rear side Dr of the hybrid drive device 100, securing of an installation space for the engagement drive source 60 is difficult. Also from this standpoint, the engagement drive source 60 that is a part of the engagement drive mechanism 6 is preferably arranged on a vehicle front side Df of the inverter unit 2 (inverter accommodation portion 32).

In this embodiment, the engagement drive source 60 is arranged on a vehicle front side Df of the inverter unit 2 (the inverter accommodation portion 32) and on a vehicle rear side Dr of a case foremost portion 33. Thereby, the hybrid drive device 100 can be prevented from having a large size in the vehicle front-rear direction. For example, the case foremost portion 33 is a boss portion for an oil cooler. A radiator and the like are provided on a vehicle front side Df of the case foremost portion 33.

### [Alternative Embodiments]

Next, alternative embodiments are described.
(1) In the above-described example in the embodiment described above, the first rotating electric machine MG1 is the target rotating electric machine. However, there is no limitation to this example, and the second rotating electric machine MG2 may be the target rotating electric machine.
(2) In the above-described example in the embodiment described above, the engagement drive source 60 is arranged on a vehicle front side of the inverter accommodation portion 32 that accommodates the inverter unit 2. However, there is no limitation to this example, and the engagement drive source 60 may be arranged on a vehicle rear side of the inverter accommodation portion 32.
(3) **In** the above-described example in the embodiment described above, the engagement power transmission mechanism 61 includes the rack gear 613a formed integrally with the transmission member 611 and extending along the axial direction X, and the pinion 613b meshing with the rack gear 613a. However, there is no limitation to this example, the engagement power transmission mechanism 61 may be configured in such a way as to move the connection member 612 along the axial direction X by using a mechanism such as a drum mechanism, a cam mechanism, or a ball screw mechanism.
(4) **In** the above-described example in the embodiment described above, connection and disconnection of the rotating element by the engagement device 4 enables the split mode and the series mode to be implemented as the running modes. However, there is no limitation to this example, an arrangement position of the engagement device 4, i.e., the rotating element to be connected and disconnected can be set arbitrarily. Thereby, another drive mode such as a parallel mode may be implemented other than the above-described split mode and series mode.
(5) The configuration disclosed in each of the above-described embodiments can be applied in combination with the configuration disclosed in another of the embodiments, as long as a contradiction does not occur. Also concerning other configurations, the embodiments disclosed in this Specification are merely examples in all respects. Thus, various improvements or modifications can be made as appropriate without departing from the essence of this disclosure.

### [Outline of This Embodiment]

Next, a summary of this embodiment is described.

A hybrid drive device (100) includes:
an input member (98) to be drive-connected to an internal combustion engine (99);
a first rotating electric machine (MG1) arranged on a first axis (Ax1);
a second rotating electric machine (MG2) arranged on a second axis (Ax2) parallel to and different from the first axis (Ax1);
an output member (97a) to be drive-connected to a wheel (W); and
a power transmission mechanism (T) that transmits drive force among the first rotating electric machine (MG1), the input member (98), the second rotating electric machine (MG2), and the output member (97a), wherein
one of the first rotating electric machine (MG1) and the second rotating electric machine (MG2) is defined as a target rotating electric machine,
an axis on which the target rotating electric machine is arranged is defined as a target axis, a direction parallel to the target axis is defined as an axial direction (X), and a direction perpendicular to the target axis is defined as a radial direction (Y),
the power transmission mechanism (T) is arranged on a first axial side (X1) being one side in the axial direction (X) with respect to the target rotating electric machine,
the power transmission mechanism (T) includes a meshing type engagement device (4),
the engagement device (4) includes:
   an engagement member (5) that is arranged on the first axial side (X1) of the target rotating electric machine, and moves in the axial direction (X) and thereby switches a state of engagement of the engagement member (5) with a rotating member constituting the power transmission mechanism (T); and
   an engagement drive mechanism (6) that drives the engagement member (5),
the engagement drive mechanism (6) includes an engagement drive source (60) and an engagement power transmission mechanism (61) that transmits drive force of the engagement drive source (60) to the engagement member (5),
the engagement drive source (60) is arranged at a position that is on an outer side of the target rotating electric machine in the radial direction (Y) and that overlaps with the target rotating electric machine when viewed in the radial direction (Y), and
the engagement power transmission mechanism (61) includes a transmission member (611) extending along the axial direction (X), and is configured to drive-connect the engagement drive source (60) and the engagement member (5) to each other via the transmission member (611).

According to this configuration, the engagement drive source (60) can be arranged at a position distanced from the engagement member (5) in the axial direction (X). Thereby, a space formed on a radial outer side (Y2) of the target rotating electric machine can be effectively used for arranging the engagement drive source (60). Thus, according to this configuration, a degree of freedom for arranging the engagement drive source (60) can be easily enhanced.

The hybrid drive device (100) further includes:
an inverter unit (2) arranged at a position that is on an outer side of the target rotating electric machine in the radial direction (Y) and that overlaps with the target rotating electric machine when viewed in the radial direction (Y); and
a case (3) that accommodates the input member (98), the first rotating electric machine (MG1), the second rotating electric machine (MG2), and the power transmission mechanism (T),
the case (3) includes a peripheral wall portion (31) and a inverter accommodation portion (32), the peripheral wall portion (31) surrounding the target rotating electric machine from an outer side in the radial direction (Y), the inverter accommodation portion (32) being formed in such a way as to protrude to an outer side in the radial direction (Y) from the peripheral wall portion (31), the inverter unit (2) being accommodated inside the inverter accommodation portion (32),
a direction circling around the target axis is defined as a circumferential direction (Z), and
the engagement drive source (60) is attached to an outer surface of the peripheral wall portion (31), at a position adjacent to the inverter accommodation portion (32) in the circumferential direction (Z).

According to this configuration, a space formed at a position adjacent to the inverter accommodation portion (32) in the circumferential direction (Z) can be effectively used for arranging the engagement drive source (60). Thus, the hybrid drive device (100) can be easily reduced in size.

The input member (98) may be arranged on the first axis (Ax1),
the power transmission mechanism (T) may include a power distribution planetary gear mechanism (1) arranged on the first axis (Ax1),
the power distribution planetary gear mechanism (1) may include:
   a first rotating element (S) to be drive-connected to the first rotating electric machine (MG1);
   a second rotating element (CR) to be drive-connected to the input member (98); and
   a third rotating element (R) to be drive-connected to the output member (97a) and the second rotating electric machine (MG2),
   the engagement member (5) may be arranged on the first axis (Ax1), and
   the target rotating electric machine may be the first rotating electric machine (MG1).

According to this configuration, the engagement member (5) arranged on the first axis (Ax1) can be appropriately driven by the engagement drive mechanism (6).

The engagement power transmission mechanism (61) further includes a connection member (612) and a speed reduction mechanism (613), the connection member (612) being engaged with the engagement member (5) in a state where the connection member (612) is rotatable relative to the engagement member (5) while being restricted from moving relative to the engagement member (5) in the axial direction (X), the speed reduction mechanism (613) decelerating drive rotation generated by the engagement drive source (60) and transmitting the decelerated drive rotation to the transmission member (611),
the transmission member (611) is coupled to the connection member (612) in such a way as to move integrally with the connection member (612) in the axial direction (X),
the speed reduction mechanism (613) includes a rack gear (613a) and a pinion (613b), the rack gear (613a) being formed integrally with the transmission member (611) and extending along the axial direction (X), the pinion (613b) meshing with the rack gear (613a), and
the engagement drive source (60) is configured in such a way as to drive and rotate the pinion (613b).

According to this configuration, an amount of movement of the engagement member (5) in the axial direction (X) can be easily controlled with high precision. Since a speed reduction ratio can be easily made large, the engagement drive source (60) can be reduced in size. Since the transmission member (611) extending in the axial direction (X) can be used for forming the rack gear (613a) along the axial direction (X), the hybrid drive device (100) can be easily reduced in size.

### [Industrial Applicability]

The technique according to this disclosure can be applied to a hybrid drive device that includes an input member to be drive-connected to an internal combustion engine, a first rotating electric machine arranged on a first axis, a second rotating electric machine arranged on a second axis parallel to and different from the first axis, an output member to be drive-connected to a wheel, and a power transmission mechanism transmitting drive force among the first rotating electric machine, the input member, the second rotating electric machine, and the output member.

## Claims

1. A hybrid drive device (100) comprising:
an input member (98) to be drive-connected to an internal combustion engine (99);
a first rotating electric machine (MG1) arranged on a first axis (Ax1);
a second rotating electric machine (MG2) arranged on a second axis (Ax2) parallel to and different from the first axis (Ax1);
an output member (97a) to be drive-connected to a wheel (W); and
a power transmission mechanism (T) that transmits drive force among the first rotating electric machine (MG1), the input member (98), the second rotating electric machine (MG2), and the output member (97a), wherein
one of the first rotating electric machine (MG1) and the second rotating electric machine (MG2) is defined as a target rotating electric machine,
an axis on which the target rotating electric machine is arranged is defined as a target axis, a direction parallel to the target axis is defined as an axial direction (X), and a direction perpendicular to the target axis is defined as a radial direction (Y),
the power transmission mechanism (T) is arranged on a first axial side (X1) being one side in the axial direction (X) with respect to the target rotating electric machine,
the power transmission mechanism (T) includes a meshing type engagement device (4),
the engagement device (4) includes:
an engagement member (5) that is arranged on the first axial side (X1) of the target rotating electric machine, and moves in the axial direction (X) and thereby switches a state of engagement of the engagement member (5) with a rotating member constituting the power transmission mechanism (T); and
an engagement drive mechanism (6) that drives the engagement member (5),
the engagement drive mechanism (6) includes an engagement drive source (60) and an engagement power transmission mechanism (61) that transmits drive force of the engagement drive source (60) to the engagement member (5),
the engagement drive source (60) is arranged at a position that is on an outer side of the target rotating electric machine in the radial direction (Y) and that overlaps with the target rotating electric machine when viewed in the radial direction (Y),
the engagement power transmission mechanism (61) includes a transmission member (611) extending along the axial direction (X), and is configured to drive-connect the engagement drive source (60) and the engagement member (5) to each other via the transmission member (611),
the hybrid drive device (100) further comprises
an inverter unit (2) arranged at a position that is on an outer side of the target rotating electric machine in the radial direction (Y) and that overlaps with the target rotating electric machine when viewed in the radial direction (Y), and
a case (3) that accommodates the input member (98), the first rotating electric machine (MG1), the second rotating electric machine (MG2), and the power transmission mechanism (T),
the case (3) includes a peripheral wall portion (31) and an inverter accommodation portion (32), the peripheral wall portion (31) surrounding the target rotating electric machine from an outer side in the radial direction (Y), the inverter accommodation portion (32) being arranged on an outer side of the peripheral wall portion (31) in the radial direction (Y), the inverter unit (2) being accommodated inside the inverter accommodation portion (32),
a direction circling around the target axis is defined as a circumferential direction (Z),
at least a part of the engagement drive mechanism (6) is attached to an outer surface of the peripheral wall portion (31), at a position adjacent to the inverter accommodation portion (32) in the circumferential direction (Z),
the engagement power transmission mechanism (61) further includes a connection member (612) and a speed reduction mechanism (613), the connection member (612) being engaged with the engagement member (5) in a state where the connection member (612) is rotatable relative to the engagement member (5) while being restricted from moving relative to the engagement member (5) in the axial direction (X), the speed reduction mechanism (613) decelerating drive rotation generated by the engagement drive source (60) and transmitting the decelerated drive rotation to the transmission member (611),
the transmission member (611) is coupled to the connection member (612) in such a way as to move integrally with the connection member (612) in the axial direction (X),
the speed reduction mechanism (613) includes a rack gear (613a) and a pinion (613b), the rack gear (613a) being formed integrally with the transmission member (611) and extending along the axial direction (X), the pinion (613b) meshing with the rack gear (613a), and
the engagement drive source (60) is configured in such a way as to drive and rotate the pinion (613b).

2. The hybrid drive device (100) according to Claim 1, wherein
the input member (98) is arranged on the first axis (Ax1),
the power transmission mechanism (T) includes a power distribution planetary gear mechanism (1) arranged on the first axis (Ax1),
the power distribution planetary gear mechanism (1) includes:
a first rotating element (S) to be drive-connected to the first rotating electric machine (MG1);
a second rotating element (CR) to be drive-connected to the input member (98); and
a third rotating element (R) to be drive-connected to the output member (97a) and the second rotating electric machine (MG2),
the engagement member (5) is arranged on the first axis (Ax1), and
the target rotating electric machine is the first rotating electric machine (MG1).

## Patentansprüche

1. Hybridantriebsvorrichtung (100) mit:
einem Eingangsbauteil (98), das mit einer Brennkraftmaschine (99) antriebsverbunden wird;
einer ersten rotierenden elektrischen Maschine (MG1), die auf einer ersten Achse (Ax1) angeordnet ist;
einer zweiten rotierenden elektrischen Maschine (MG2), die auf einer zweiten Achse (Ax2) parallel zu und verschieden von der ersten Achse (Ax1) angeordnet ist;
einem Ausgangsbauteil (97a), das mit einem Rad (W) antriebsverbunden wird; und
einem Leistungsübertragungsmechanismus (T), der Antriebskraft zwischen der ersten rotierenden elektrischen Maschine (MG1), dem Eingangsbauteil (98), der zweiten rotierenden elektrischen Maschine (MG2) und dem Ausgangsbauteil (97a) überträgt, bei der eine der ersten rotierenden elektrischen Maschine (MG1) und der zweiten rotierenden elektrischen Maschine (MG2) als eine rotierende elektrische Sollmaschine definiert ist,
eine Achse, auf der die rotierende elektrische Sollmaschine angeordnet ist, als eine Sollachse definiert ist, eine Richtung parallel zu der Sollachse als eine axiale Richtung (X) definiert ist, und eine Richtung senkrecht zu der Sollachse als eine radiale Richtung (Y) definiert ist,
der Leistungsübertragungsmechanismus (T) auf einer ersten axialen Seite (X1), die eine Seite in der axialen Richtung (X) ist, in Bezug auf die rotierende elektrische Sollmaschine angeordnet ist,
der Leistungsübertragungsmechanismus (T) eine Verzahnungseingriffsvorrichtung (4) aufweist,
die Eingriffsvorrichtung (4) aufweist:
ein Eingriffsbauteil (5), das auf der ersten axialen Seite (X1) der rotierenden elektrischen Sollmaschine angeordnet ist und sich in der axialen Richtung (X) bewegt und dadurch einen Eingriffszustand des Eingriffsbauteils (5) mit einem rotierenden Bauteil, das den Leistungsübertragungsmechanismus (T) darstellt, wechselt; und
einen Eingriffsantriebsmechanismus (6), der das Eingriffsbauteil (5) antreibt,
der Eingriffsantriebsmechanismus (6) eine Eingriffsantriebsquelle (60) und einen Eingriffsleistungsübertragungsmechanismus (61), der Antriebskraft der Eingriffsantriebsquelle (60) an das Eingriffsbauteil (5) überträgt, aufweist,
die Eingriffsantriebsquelle (60) an einer Position angeordnet ist, die sich auf einer äußeren Seite der rotierenden elektrischen Sollmaschine in der radialen Richtung (Y) befindet und die die rotierende elektrische Sollmaschine in der radialen Richtung (Y) betrachtet überlappt,
der Eingriffsleistungsübertragungsmechanismus (61) ein Übertragungsbauteil (611), das sich entlang der axialen Richtung (X) erstreckt, aufweist und dazu ausgebildet ist, die Eingriffsantriebsquelle (60) und das Eingriffsbauteil (5) über das Übertragungsbauteil (611) antreibend miteinander zu verbinden,
die Hybridantriebsvorrichtung (100) ferner
eine Wechselrichtereinheit (2), die an einer Position angeordnet ist, die sich auf einer äußeren Seite der rotierenden elektrischen Sollmaschine in der radialen Richtung (Y) befindet und die die rotierende elektrische Sollmaschine in der radialen Richtung (Y) betrachtet überlappt, und
ein Gehäuse (3), das das Eingangsbauteil (98), die erste rotierende elektrische Maschine (MG1), die zweite rotierende elektrische Maschine (MG2) und den Leistungsübertragungsmechanismus (T) aufnimmt, aufweist,
das Gehäuse (3) einen Umfangswandabschnitt (31) und einen Wechselrichteraufnahmeabschnitt (32) aufweist, welcher Umfangswandabschnitt (31) die rotierende elektrische Sollmaschine von einer äußeren Seite in der radialen Richtung (Y) umgibt, welcher Wechselrichteraufnahmeabschnitt (32) auf einer äußeren Seite des Umfangswandabschnitts (31) in der radialen Richtung (Y) angeordnet ist, welche Wechselrichtereinheit (2) innerhalb des Wechselrichteraufnahmeabschnitts (32) aufgenommen ist,
eine Richtung, die um die Sollachse kreist, als eine Umfangsrichtung (Z) definiert ist,
zumindest ein Teil des Eingriffsantriebsmechanismus (6) an einer äußeren Oberfläche des Umfangswandabschnitts (31) an einer Position angrenzend an den Wechselrichteraufnahmeabschnitt (32) in der Umfangsrichtung (Z) angebracht ist,
der Eingriffsleistungsübertragungsmechanismus (61) ferner ein Verbindungsbauteil (612) und einen Untersetzungsmechanismus (613) aufweist, welches Verbindungsbauteil (612) mit dem Eingriffsbauteil (5) in einem Zustand in Eingriff ist, in dem das Verbindungsbauteil (612) relativ zu dem Eingriffsbauteil (5) drehbar ist, während es darin eingeschränkt ist, sich relativ zu dem Eingriffsbauteil (5) in der axialen Richtung (X) zu bewegen, welcher Untersetzungsmechanismus (613) eine Antriebsrotation, die durch die Eingriffsantriebsquelle (60) erzeugt wird, verlangsamt und die verlangsamte Antriebsrotation an das Übertragungsbauteil (611) überträgt,
das Übertragungsbauteil (611) an das Verbindungsbauteil (612) in einer derartigen Weise gekoppelt ist, dass es sich integral mit dem Verbindungsbauteil (612) in der axialen Richtung (X) bewegt,
der Untersetzungsmechanismus (613) eine Zahnstange (613a) und ein Ritzel (613b) aufweist, welche Zahnstange (613a) integral mit dem Übertragungsbauteil (611) ausgebildet ist und sich entlang der axialen Richtung (X) erstreckt, welches Ritzel (613b) mit der Zahnstange (613a) kämmt, und
die Eingriffsantriebsquelle (60) in einer derartigen Weise ausgebildet ist, dass sie das Ritzel (613b) antreibt und dreht.

2. Hybridantriebsvorrichtung (100) nach Anspruch 1, bei der
das Eingangsbauteil (98) auf der ersten Achse (Ax1) angeordnet ist,
der Leistungsübertragungsmechanismus (T) einen Leistungsverteilungsplanetengetriebemechanismus (1), der auf der ersten Achse (Ax1) angeordnet ist, aufweist,
der Leistungsverteilungsplanetengetriebemechanismus (1) aufweist:
ein erstes rotierendes Element (S), das mit der ersten rotierenden elektrischen Maschine (MG1) antriebsverbunden wird;
ein zweites rotierendes Element (CR), das mit dem Eingangsbauteil (98) antriebsverbunden wird; und
ein drittes rotierendes Element (R), das mit dem Ausgangsbauteil (97a) und der zweiten rotierenden elektrischen Maschine (MG2) antriebsverbunden wird,
das Eingriffsbauteil (5) auf der ersten Achse (Ax1) angeordnet ist, und
die rotierende elektrische Sollmaschine die erste rotierende elektrische Maschine (MG1) ist.

## Revendications

1. Dispositif d'entraînement hybride (100) comprenant :
un élément d'entrée (98) destiné à être relié en entraînement à un moteur à combustion interne (99) ;
une première machine électrique tournante (MG1) agencée sur un premier axe (Ax1) ;
une seconde machine électrique tournante (MG2) agencée sur un second axe (Ax2) parallèle au premier axe (Ax1) et différent de celui-ci ;
un élément de sortie (97a) destiné à être relié en entraînement à une roue (W) ; et
un mécanisme de transmission de puissance (T) qui transmet une force d'entraînement entre la première machine électrique tournante (MG1), l'élément d'entrée (98), la seconde machine électrique tournante (MG2) et l'élément de sortie (97a), dans lequel
l'une parmi la première machine électrique tournante (MG1) et la seconde machine électrique tournante (MG2) est définie comme une machine électrique tournante cible,
un axe sur lequel la machine électrique tournante cible est agencée est défini comme un axe cible, une direction parallèle à l'axe cible est définie comme une direction axiale (X), et une direction perpendiculaire à l'axe cible est définie comme une direction radiale (Y),
le mécanisme de transmission de puissance (T) est agencé sur un premier côté axial (X1) qui est un côté dans la direction axiale (X) par rapport à la machine électrique tournante cible,
le mécanisme de transmission de puissance (T) inclut un dispositif d'engagement du type à engrènement (4),
le dispositif d'engagement (4) inclut :
un élément d'engagement (5) qui est agencé sur le premier côté axial (X1) de la machine électrique tournante cible, et se déplace dans la direction axiale (X) et commute ainsi un état d'engagement de l'élément d'engagement (5) avec un élément tournant constituant le mécanisme de transmission de puissance (T) ; et
un mécanisme d'entraînement d'engagement (6) qui entraîne l'élément d'engagement (5),
le mécanisme d'entraînement d'engagement (6) inclut une source d'entraînement d'engagement (60) et un mécanisme de transmission de puissance d'engagement (61) qui transmet la force d'entraînement de la source d'entraînement d'engagement (60) à l'élément d'engagement (5),
la source d'entraînement d'engagement (60) est agencée à une position qui est sur un côté extérieur de la machine électrique tournante cible dans la direction radiale (Y) et qui chevauche la machine électrique tournante cible lorsqu'elle est vue dans la direction radiale (Y),
le mécanisme de transmission de puissance d'engagement (61) inclut un élément de transmission (611)s'étendant le long de la direction axiale (X), et est configuré pour relier en entraînement la source d'entraînement d'engagement (60) et l'élément d'engagement (5) l'un à l'autre via l'élément de transmission (611),
le dispositif d'entraînement hybride (100) comprend en outre
une unité d'onduleur (2) agencée à une position qui est sur un côté extérieur de la machine électrique tournante cible dans la direction radiale (Y) et qui chevauche la machine électrique tournante cible lorsqu'elle est vue dans la direction radiale (Y), et
un carter (3) qui loge l'élément d'entrée (98), la première machine électrique tournante (MG1), la seconde machine électrique tournante (MG2) et le mécanisme de transmission de puissance (T),
le carter (3) inclut une partie de paroi périphérique (31) et une partie de logement d'onduleur (32), la partie de paroi périphérique (31) entourant la machine électrique tournante cible depuis un côté extérieur dans la direction radiale (Y), la partie de logement d'onduleur (32) étant agencée sur un côté extérieur de la partie de paroi périphérique (31) dans la direction radiale (Y), l'unité d'onduleur (2) étant logée à l'intérieur de la partie de logement d'onduleur (32),
une direction tournant autour de l'axe cible est définie comme une direction circonférentielle (Z),
au moins une partie du mécanisme d'entraînement d'engagement (6) est fixée à une surface extérieure de la partie de paroi périphérique (31), à une position adjacente à la partie de logement d'onduleur (32) dans la direction circonférentielle (Z),
le mécanisme de transmission de puissance d'engagement (61) inclut en outre un élément de connexion (612) et un mécanisme de réduction de vitesse (613), l'élément de connexion (612) étant en prise avec l'élément d'engagement (5) dans un état où l'élément de connexion (612) est apte à tourner par rapport à l'élément d'engagement (5) tout en étant immobilisé en déplacement par rapport à l'élément d'engagement (5) dans la direction axiale (X), le mécanisme de réduction de vitesse (613) réduisant la vitesse d'une rotation d'entraînement générée par la source d'entraînement d'engagement (60) et transmettant la rotation d'entraînement à vitesse réduite à l'élément de transmission (611),
l'élément de transmission (611) est couplé à l'élément de connexion (612) de manière à se déplacer solidairement avec l'élément de connexion (612) dans la direction axiale (X),
le mécanisme de réduction de vitesse (613) inclut une crémaillère (613a) et un pignon (613b), la crémaillère (613a) étant formée d'un seul tenant avec l'élément de transmission (611) et s'étendant le long de la direction axiale (X), le pignon (613b) s'engrenant avec la crémaillère (613a), et
la source d'entraînement d'engagement (60) est configurée de manière à entraîner et à faire tourner le pignon (613b).

2. Dispositif d'entraînement hybride (100) selon la revendication 1, dans lequel
l'élément d'entrée (98) est agencé sur le premier axe (Ax1),
le mécanisme de transmission de puissance (T) inclut un mécanisme d'engrenage planétaire de distribution de puissance (1) agencé sur le premier axe (Ax1),
le mécanisme d'engrenage planétaire de distribution de puissance (1) inclut :
un premier élément tournant (S) destiné à être relié en entraînement à la première machine électrique tournante (MG1) ;
un second élément tournant (CR) destiné à être relié en entraînement à l'élément d'entrée (98) ; et
un troisième élément tournant (R) destiné à être relié en entraînement à l'élément de sortie (97a) et à la seconde machine électrique tournante (MG2),
l'élément d'engagement (5) est agencé sur le premier axe (Ax1), et
la machine électrique tournante cible est la première machine électrique tournante (MG1).
